# EUROPÄISCHE PATENTSCHRIFT

(11) **EP 1 682 358 B1**
(45) Veröffentlichungstag und Bekanntmachung des Hinweises auf die Patenterteilung: **13.01.2010**
(21) Anmeldenummer: 04802708.0
(22) Anmeldetag: 05.11.2004
(51) Int. Cl.: B60B 11/04

(54) **FELGE**
WHEEL RIM
JANTE

(30) Priorität: 13.11.2003 DE 10353800
(43) Veröffentlichungstag der Anmeldung: 26.07.2006
(73) Patentinhaber: Kronprinz GmbH, 42697 Solingen (DE)
(72) Erfinder: SCHUMACHER, Jörg, 41844 Wegberg (DE)
(74) Vertreter: Meissner, Peter E.
(86) Internationale Anmeldenummer: PCT/DE2004/002491
(87) Internationale Veröffentlichungsnummer: WO 2005/047022

(56) Entgegenhaltungen:
- DE-A1- 10 037 562
- US-A- 3 155 429
- US-A- 3 779 300

## Beschreibung

Die Erfindung betrifft ein Felge, die zwei Felgenkonturen mit jeweils einem äußeren Felgenhorn, einem äußeren Reifensitz, einem Tiefbett, einem inneren Reifensitz und einem inneren Felgenhorn aufweist, die jeweils zur Aufnahme von nebeneinander angeordneten Einzelreifen ausgebildet sind, wobei deren Montage jeweils über die äußeren Felgenhörner erfolgt.

Aus der DE 100 37 562 A1 ist ein Sicherheitsreifenradsystem bekannt, bei dem eine Mehrfachfelge, bestehend aus einem Stück oder aneinander gesetzten Einzelfelgen, vorgesehen ist, auf der mehrere Reifen nebeneinander montiert werden können. Auf diese Weise bilden beispielsweise drei nebeneinander montierte schmalere Reifen eine Lauffläche, die einem üblichen Standardreifen entspricht.

Aus der US 3 779 300 ist ein Fahrzeugrad bekannt, das auf einer gemeinsamen ⊦eige zwei nebeneinander angeordnete Einzelreifen aufnehmen kann. Ermöglicht wird das, weil die Felge äußere Felgenhömer aufweist, die eine Stütze für die äußeren Reifenwulste darstellen. Im mittleren Bereich der Felge ist ein Element montierbar, das innere Felgenhömer bildet, um den inneren Reifenwulsten der beiden Reifen eine Stütze zu sein.

Ein vergleichbares Fahrzeugrad ist auch aus der US 3 155 429 zu entnehmen.

Im LKW Bereich gibt es Situationen, wo einerseits eine Zwillingsbereifung sinnvoll und notwendig ist, aber in anderen Situationen, auch eine Einzelbereifung mit einem Breitreifen vorteilhafter sein kann.

Bisher ist eine Umrüstung des Fahrzeuges nur durch Austausch der Felge möglich, d.h. die für den Einsatz von Zwillingsreifen nutzbare Felge muss durch eine Felge ersetzt werden, auf die ein Einzelreifen aufziehbar ist.

Dies ist nicht nur zeitaufwendig, sondern setzt auch eine Lagerhaltung sowohl von Felgen für Einzelbereifung wie auch Felgen für Zwillingsbereifung voraus,

Der Erfindung liegt daher die Aufgabe zugrunde, ein Fahrzeugrad bereit zu stellen, das sowohl für den Einsatz mit einer Zwillingsbereifung wie auch mit einem Einzelreifen verwendbar ist.

Gelöst wird diese Aufgabe ausgehen von den im Oberbegriff des Patentanspruchs 1 angegebenen Merkmalen erfindungsgemäß dadurch, dass die zwei Felgenkonturen über ein zusätzliches, zentrales Tiefbett verbunden sind und dass an Stelle der beiden Einzelreifen ein über das zentrale Tiefbett reichender, sich an den beiden äußeren Felgenhörnem abstützender, Einzelreifen montierbar ist und dass das zentrale Tiefbett zur Aufnahme eines Notlaufelements bei Verwendung mit einem Einzelreifen ausgebildet ist.

Ein derartig ausgebildetes Fahrzeugrad lässt sich schnell und einfach umrüsten, so dass der Betrieb - unter Verwendung ein und derselben Felge - mit einem Einzeireifen oder mit Zwillingsreifen erfolgen kann.

Für den Einsatz der Felge mit einer Einfachbereifung ist es notwendig, dass die Verbindung zwischen den zwei Felgenkonturen luftdicht ist.

Das zentrale Tiefbett kann entweder mit den beiden inneren Felgenhömern oder beiden inneren Reifensitze verbunden sein.

Es ist auch möglich, dass die Feige ein im zentralen Tiefbett demontierbar angeordnetes Element aufweist, das die äußeren Felgenkonturen der Felge vervollstandigt.

Dabei kann das Element die äußeren Felgenkonturen durch zwei innere Reifensitze und Felgenhörner vervollständigen oder das Element vervollständigt die äußeren Felgenkonturen durch zwei innere Felgenhörner.

Die maximalen Außendurchmesser (reifenseitig) der 3 Tiefbetten sind so ausgelegt, dass die Montage von Zwillingsreifen und auch die Montage des Einzelreifens möglich ist.

Um die Radschüssel an den 3 zur Verfügung stehenden Tiefbetten anbinden zu können, ist der Innendurchmesser des mittleren Tiefbettes geringfügig kleiner als der Innendurchmesser der beiden äußeren Tiefbetten. Dabei beträgt die Differenz des minimalen Durchmessers des zentralen Tiefbettes bezogen auf die zwei äußeren Tiefbetten 2 bis 3 mm.

Die Erfindung soll nachfolgend unter Bezug auf die Zeichnungen erläutert werden.

Dabei zeigt die
Figur 1 einen vereinfachten Querschnitt durch das Fahrzeugrad mit einer Einzelbereifung und
Figur 2 einen entsprechenden Querschnitt durch das Fahrzeugrad, wenn es für den Einsatz mit Zwillingsreifen ausgelegt ist.
Figur 3 und 4 zeigen weitere Ausführungsbeispiele der Erfindung.

In allen Figuren sind gleiche Teile mit gleichen Bezugszeichen versehen.

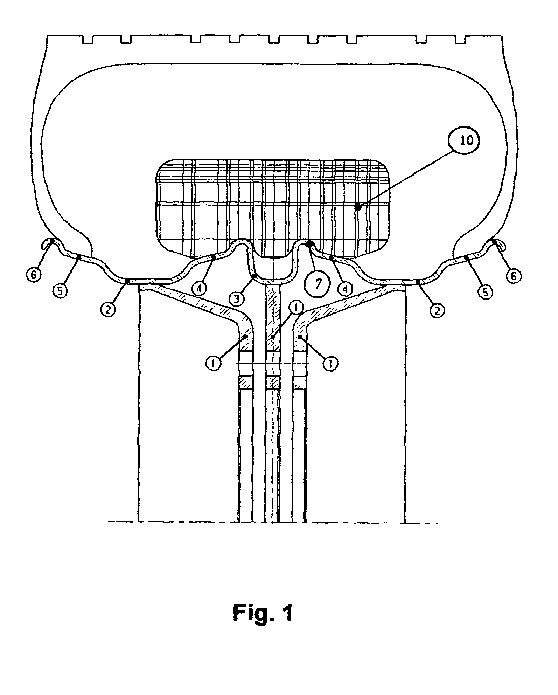

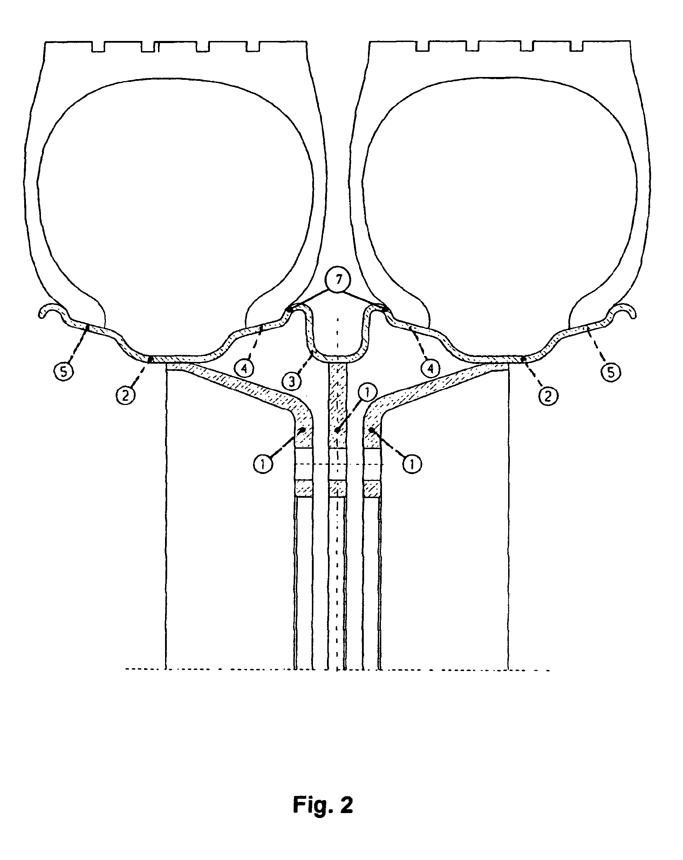

Bei der Ausführung nach den Figuren 1 und 2 werden drei mögliche Positionen und Ausführungen der Fahrzeugradschüssel 1 gezeigt. 2 bezeichnet die beiden - spiegelbildlich zu einer hier nicht dargestellten Fahrzeugradmittelebene angeordneten - Felgenkonturen. Zwischen diesen beiden Felgenkonturen befindet sich ein zusätzliches, zentrales Tiefbett 3. Mit 5 sind die an die äußeren Felgenhörner 6 angrenzenden Reifensitze bezeichnet.

Bei der in der Figur 1 gezeigten Ausführung ist ein Einzelreifen montiert. Dieser stützt sich an den äußeren Reifensitzen 5 und den äußeren Felgenhörnern 6 ab.

Bei diesem Einsatz des Fahrzeugrades mit einem Einzelreifen kann optional und vorteilhaft in dem zentralen Tiefbett 3 ein Notlaufelement 10 angeordnet werden, über das sich der Einzelreifen erstreckt.

Bei der Anordnung einer Zwillingsbereifung - wie sie in der Figur 2 dargestellt ist - stützen sich die inneren Reifenwulste der beiden Zwillingsreifen jeweils an den inneren Reifensitze 4 ab, zu denen die entsprechenden inneren Felgenhömer 7 gehören. Diese begrenzen gleichzeitig das zentrale Tiefbett 3.

Bei montierten Zwillingsreifen werden diese durch das zentrale Tiefbett 3 im Abstand voneinander gehalten, so dass sie sich nicht gegenseitig berühren.

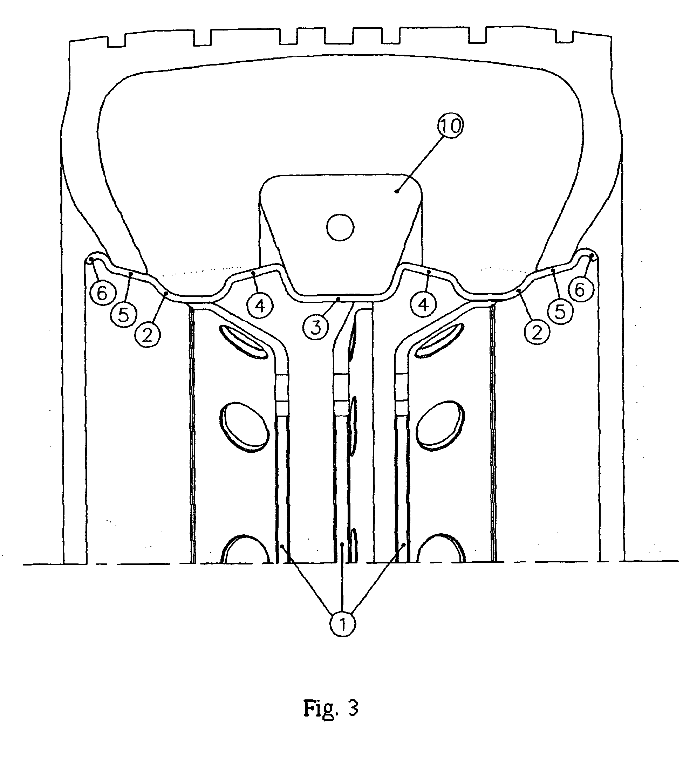

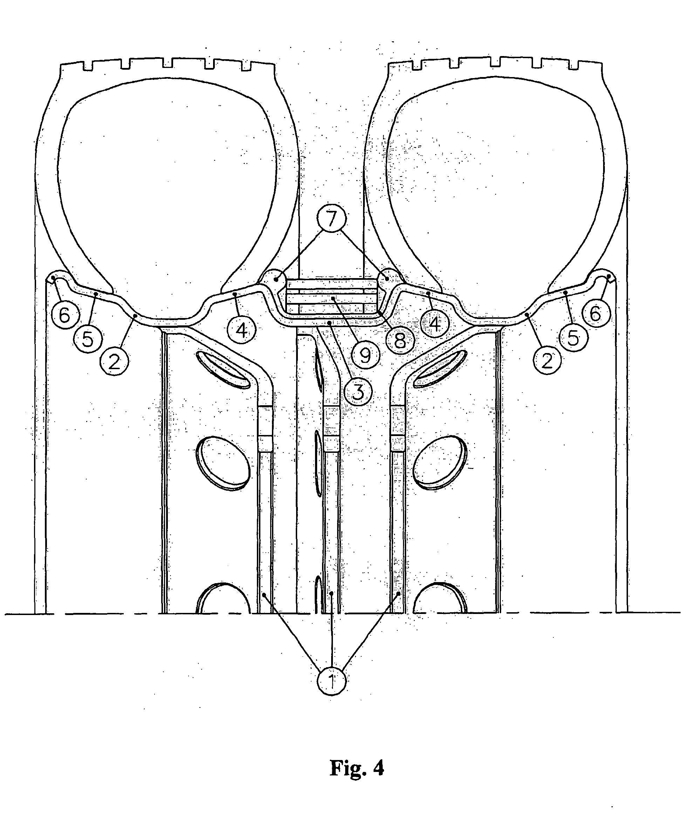

Mit der Felge werden - bei dem in den Figuren 3 und 4 gezeigten Ausführungsbeispiel - drei Ausführungen und Positionen von Fahrzeugradschüsseln 1 gezeigt. Mit 2 sind in den Figuren die beiden - spiegelbildlich zu einer hier nicht dargestellten Fahrzeugradmittelebene angeordneten - Felgenkonturen bezeichnet. Zwischen diesen beiden Feigenkonturen befindet sich ein zusätzliches, zentrales Tiefbett 3.

In dieses zentrale Tiefbett ist - wie in der Figur 4 gezeigt - ein U-förmiges Ringelement 8 so eingesetzt, dass dessen umlaufenden Kanten, d.h. die freien Enden der Schenkel, aus dem Tiefbett herausragen und als Felgenhörner 7 ausgebildet sind. Diese inneren Felgenhörner 7 grenzen an die inneren Reifensitze 4 an.

Wenn auf der Felge eine Zwillingsbereifung - wie sie in der Figur 4 dargestellt ist - montiert ist, stützen sich die inneren Reifenwulste an den inneren Felgenhömer 7 und die äußeren Abstand Reifenwulste an den äußeren Felgenhörnern 6 ab. Durch das Ringelement 8 wird gleichzeitig ein Abstand zwischen den Einzelreifen aufrechterhalten.

Wird alternativ zu der Zwillingsbereifung eine Einzelbereifung gewünscht, so überspannt der Einzelreifen das zentrale Tiefbett und damit auch das Ringelement und stützt sich nur an den äußeren Felgenhörnern 6 ab.

Bei Einsatz des Fahrzeugrades mit einem Einzelreifen, kann das Ringelement vollständig durch ein Notlaufelement 10 ersetzt werden - wie dies die Figur 3 zeigt - oder ein derartiges Notlaufelement wird an oder in dem Ringelement montiert. Der Einzelreifen erstreckt sich dann über das Ringelement oder Notlaufelement und stützt sich an den äußeren Felgenhörnern 6 bzw. zugeordneten Reifensitzen 5 ab.

Bei beiden Ausführungsbeispielen kann das Notlaufelement als Ring ausgebildet sein oder aus einzelnen ringförmig über den Felgenumfang verteilten Einzelelementen bestehen.

Zur Erhöhung der Festigkeit des Ringelementes, sind an diesem von Kante zu Kante bzw. Felgenhom zu Felgenhom sich erstreckende Verstärkungsstege 9 vorgesehen.

Es sei noch erläutert, dass bei der Montage eines Einzelreifens zunächst die eine Reifenwulst über das erste Tiefbett, das zentrale Tiefbett zum anderen (äußeren) Tiefbett geführt wird und dann wird die zweite Reifenwulst in das ersten Tiefbett gedrückt, der Reifen aufgepumpt und damit beide Reifenwulste in ihre jeweiligen äußeren Reifensitze gedrückt.

## Patentansprüche

1. Felge, die zwei Felgenkonturen (2) mit jeweils einem äußeren Felgenhom (6), einem äußeren Reifensitz (5), einem Tiefbett, einem inneren Reifensitz (4) und einem inneren Felgenhorn (7) aufweist, die jeweils zur Aufnahme von nebeneinander angeordneten Einzelreffen ausgebildet sind, wobei deren Montage jeweils über die äußeren Felgenhörner erfolgt,
**dadurch gekennzeichnet,**
**dass** die zwei Felgenkonturen über ein zusätzliches, zentrales Tiefbett (3) verbunden sind und dass an Stelle der beiden Einzelreifen ein über das zentrale Tiefbett reichender, sich an den beiden äußeren Felgenhörnern (6) abstützender, Einzelreifen montierbar ist und dass das zentrale Tiefbett zur Aufnahme eines Notlaufelements bei Verwendung mit einem Einzelreifen ausgebildet ist.

2. Felge nach Anspruch 1,
**dadurch gekennzeichnet,**
**dass** die Verbindung zwischen den zwei Felgenkonturen luftdicht ist.

3. Felge nach den Ansprüchen 1 bis 2,
**dadurch gekennzeichnet,**
**dass** das zentrale Tiefbett (3) mit den beiden inneren Felgenhörnern (7) verbunden ist.

4. Felge nach einem der Ansprüche 1 bis 2,
**dadurch gekennzeichnet,**
**dass** das zentrale Tiefbett (3) mit den beiden inneren Reifensitzen (4) verbunden ist.

5. Felge nach Anspruch 4,
**dadurch gekennzeichnet,**
**dass** sie ein im zentralen Tiefbett (3) demontierbar angeordnetes Element (8) aufweist, das die äußeren Felgenkonturen der Felge vervollständigt.

6. Felge nach Anspruch 5,
**dadurch gekennzeichnet,**
**dass** das Element die äußeren Felgenkonturen durch zwei innere Reifensitze und Felgenhörner vervollständigt.

7. Felge nach Anspruch 5,
**dadurch gekennzeichnet,**
**dass** das Element (8) die äußeren Felgenkonturen durch zwei innere Felgenhömer (7) vervollständigt.

8. Felge nach einem der vorstehenden Ansprüche,
**dadurch gekennzeichnet,**
**dass** der minimale Innendurchmesser des zentralen Tiefbettes geringer als der minimale Innendurchmesser der zwei äußeren Tiefbetten ist.

9. Felge nach Anspruch 8,
**dadurch gekennzeichnet,**
**dass** die Differenz des minimalen Durchmessers des zentralen Tiefbettes bezogen auf die zwei äußeren Tiefbetten 2 bis 3 mm beträgt.

10. Fahrzeugrad mit einer Schüssel und einer Felge gemäß den vorstehenden Ansprüchen.

## Claims

1. A wheel rim having two rim contours (2) each with an outer rim flange (6), an outer bead seating (5), a drop centre, an inner bead seating (4) and an inner rim flange (7), which rim contours (2) are each designed to receive single tyres arranged side by side, wherein fitting thereof takes place in each case via the outer rim flanges, **characterised in that** the two rim contours are connected via an additional central drop centre (3), and **in that** a single tyre extending over the central drop centre and supported on the two outer rim flanges (6) can be fitted instead of the two single tyres, and **in that** the central drop centre is designed to receive a flat-running element when used with a single tyre.

2. A wheel rim according to claim 1, **characterised in that** the connection between the two rim contours is air-tight.

3. A wheel rim according to claims 1 to 2, **characterised in that** the central drop centre (3) is connected to the two inner rim flanges (7).

4. A wheel rim according to either one of claims 1 to 2, **characterised in that** the central drop centre (3) is connected to the two inner bead seatings (4).

5. A wheel rim according to claim 4, **characterised in that** it has an element (8) removably arranged in the central drop centre (3), which element completes the outer rim contours of the wheel rim.

6. A wheel rim according to claim 5, **characterised in that** the element completes the outer rim contours by means of two inner bead seatings and rim flanges.

7. A wheel rim according to claim 5, **characterised in that** the element (8) completes the outer rim contours by means of two inner rim flanges (7).

8. A wheel rim according to any one of the preceding claims, **characterised in that** the minimum inside diameter of the central drop centre is less than the minimum inside diameter of the two outer drop centres.

9. A wheel rim according to claim 8, **characterised in that** the minimum diameter difference of the central drop centre relative to the two outer drop centres is 2 to 3 mm.

10. A vehicle wheel having a disc and a rim according to the preceding claims.

## Revendications

1. Jante présentant deux contours de jante (2) avec chacun un rebord de jante extérieur (6), un plat de jante extérieur (5), une gorge, un plat de jante intérieur (4) et un rebord de jante intérieur (7) conçus pour recevoir des pneus agencés l'un à côté de l'autre, leur montage s'effectuant par les rebords de jante extérieurs,
**caractérisée en ce que** les deux contours de jante sont reliés par le biais d'une gorge centrale (3), **en ce que**, à la place des deux pneus, il est possible de monter un seul pneu s'étendant sur la gorge centrale et venant s'appuyer au niveau des deux rebords de jante extérieurs (6), et **en ce que** la gorge centrale est conçue pour recevoir un élément de roulement de secours en cas d'utilisation avec un seul pneu.

2. Jante selon la revendication 1,
**caractérisée en ce que** la liaison entre les deux contours de jante est étanche à l'air.

3. Jante selon les revendications 1 à 2,
**caractérisée en ce que** la gorge centrale (3) est reliée aux deux rebords de jante intérieurs (7).

4. Jante selon l'une des revendications 1 à 2,
**caractérisée en ce que** la gorge centrale (3) est reliée aux deux plats de jante intérieurs (4).

5. Jante selon la revendication 4,
**caractérisée en ce qu'**elle présente dans la gorge centrale (3) un élément démontable (8) qui vient compléter les contours extérieurs de la jante.

6. Jante selon la revendication 5,
**caractérisée en ce que** l'élément complète les contours de jante extérieurs par deux plats de jante intérieurs et rebords de jante.

7. Jante selon la revendication 5,
**caractérisée en ce que** l'élément (8) complète les contours de jante extérieurs par deux rebords de jante intérieurs (7).

8. Jante selon l'une des revendications précédentes,
**caractérisée en ce que** le diamètre intérieur minimal de la gorge centrale est inférieur au diamètre intérieur minimal des deux gorges extérieures.

9. Jante selon la revendication 8,
**caractérisée en ce que** la différence entre le diamètre intérieur minimal de la gorge centrale et celui des deux gorges extérieures est de 2 à 3 mm.

10. Roue de véhicule comprenant un plat et une jante conformément à l'une des revendications précédentes.
